# EUROPÄISCHE PATENTSCHRIFT

(11) **EP 1 099 364 B1**
(45) Veröffentlichungstag und Bekanntmachung des Hinweises auf die Patenterteilung: **10.12.2003**
(21) Anmeldenummer: 00123626.4
(22) Anmeldetag: 30.10.2000
(51) Int. Cl.: A01C 17/00, A01B 59/06, G01G 19/08

(54) **Landwirtschaftliche Verteilermaschine**
Agricultural distributor
Distributeur agricole

(30) Priorität: 04.11.1999 DE 19953069
(43) Veröffentlichungstag der Anmeldung: 16.05.2001
(73) Patentinhaber: Amazonen-Werke H. Dreyer GmbH & Co. KG, 49205 Hasbergen (DE)
(72) Erfinder: Dreyer, Heinz, Dr., Dipl.-Ing, 49205 Hasbergen (DE)

(56) Entgegenhaltungen:
- EP-A- 0 407 705
- EP-A- 0 713 638
- DE-A- 19 717 285
- FR-A- 2 677 119

## Beschreibung

Die Erfindung betrifft eine landwirtschaftliche Verteilmaschine gemäß des Oberbegriffes des Patentanspruches 1.

Eine derartige Verteilmaschine ist z.B. aus der EP 0 407 705 bekannt. Bei dieser Verteilmaschine ist eine Wiegezelle zwischen dem Vorsatzrahmen und dem Rahmen der Verteilmaschine angeordnet. Eine derartig ausgerüstete Verteilmaschine ist relativ teuer, weil die Auswerteelektronik des Wiegezellenelementes und die damit verbundene Regeleinrichtung sehr teuer sind.

Der Erfindung liegt die Aufgabe zugrunde, die Voraussetzung bei einer Verteilmaschine dafür zu schaffen, daß die Wiegeeinrichtung in einfacher Weise nachgerüstet werden kann.

Diese Aufgabe wird erfindungsgemäß durch die kennzeichnenden Merkmale des Patentanspruches 1 gelöst. Infolge dieser Maßnahmen kann der Landwirt zunächst eine Verteilmaschine mit einem Vorsatzrahmen erwerben, wobei der Vorsatzrahmen gegenüber dem Rahmen starr festgesetzt ist. Wenn er sich später entschließt, seine Verteilmaschine mit einer Wiegeeinrichtung aufzurüsten, kann in einfacher Weise das Wiegezellenelement nachgerüstet werden. Hierzu ist es lediglich erforderlich, das Wiegezellenelement mit der Elektronik nachzurüsten und die den Vorsatzrahmen gegenüber dem Rahmen starr festsetzenden Fixierungselemente zu entfernen.

In einfacher Weise ist vorgesehen, daß die Fixierungselemente jeweils mittels zweier Bolzen am Rahmen, vorzugsweise an den beiden übereinanderliegenden Unterlenkeranschlußpunkten und am Vorsatzrahmen an den Anlenkbolzen der Gelenkstreben befestigt sind.

Aufgrund der erfindungsgemäßen Maßnahmen erwirbt der Landwirt zunächst eine Verteilmaschine, die bereits mit einem Vorsatzrahmen ausgerüstet und somit für die Anordnung eines Wiegezellenelementes vorgerüstet ist. Hierdurch läßt sich in sehr einfacher Weise das Wiegezellenelement nachrüsten.

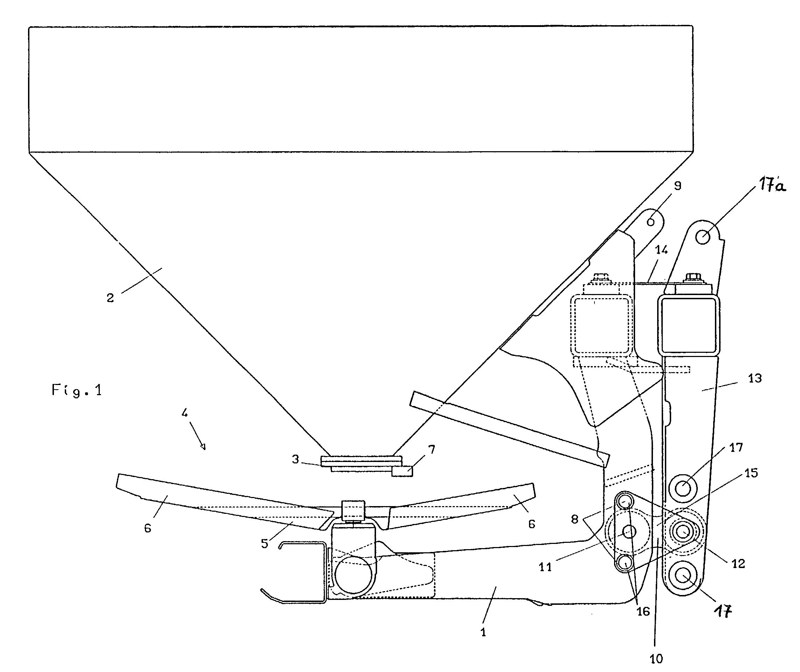

Weitere Einzelheiten der Erfindung sind den Zeichnungen zu entnehmen. Hierbei zeigen
- Fig.1: die Verteilmaschine mit starr festgesetzten Vorsatzrahmen in Seitenansicht und
- Fig.2: die Verteilmaschine mit Wiegeeinrichtung in Seitenansicht.

Die Verteilmaschine weist den Rahmen 1 und den Vorratsbehälter 2 auf. Das untere trichterförmige Ende des Vorratsbehälters 2 ist mit der Dosiereinrichtung 3 ausgestattet, die das sich im Vorratsbehälter 2 befindliche Material in einstellbarer Weise der unterhalb der Dosiereinrichtung 3 angeordneten Verteileinrichtung 4 zuführt. Die Verteileinrichtung 4 ist als rotierend angetriebene Schleuderscheibe 5, die Wurfschaufeln 6 aufweist, ausgebildet. Die Dosiereinrichtung 3 besitzt eine Einstelleinrichtung 7, die in bevorzugter Weise als elektrischer Stellmotor ausgebildet ist.

Der Rahmen 1 weist auf seiner Vorderseite die Dreipunktkupplungselemente 8 und 9 auf. Im unteren Bereich des Rahmens 1 sind die beiden unteren Dreipunktkupplungselemente 8 angeordnet. Zwischen den beiden übereinander angeordneten Dreipunktkupplungselementen 8 sind jeweils die unteren Gelenkstreben 10 mittels der Bolzen 11 am Rahmen 1 angeordnet. Mittels der beiden unteren, beabstandet zueinander angeordneten Gelenkstreben 10 ist über die Gelenkbolzen 12 der Vorsatzrahmen 13 angeordnet. Im oberen Bereich ist der Vorsatzrahmen 13 mittels zweier zueinander angeordneter, als Blattfedern 14 ausgebildeter Verbindungselemente befestigt. Wenn kein Wiegezellenelement zwischen dem Vorsatzrahmen 13 und dem Rahmen 1 angeordnet ist, sind zwischen dem Rahmen 1 und dem Vorsatzrahmen 13 die zwei den Vorsatzrahmen 13 gegenüber dem Rahmen 1 starr festsetzende Fixierungselemente 15 angeordnet. Die Fixierungselemente 15 sind jeweils mittels zweier Bolzen 16 am Rahmen 1, und zwar an den beiden übereinanderliegenden Unterlenkeranschlußpunkten 8 und am Vorsatzrahmen 13 an den Anlenkbolzen 12 der Gelenkstreben 10 befestigt. Der Vorsatzrahmen 13 weist das obere Dreipunktanschlußelement 17a und die übereinanderliegenden unteren, quer zur Fahrtrichtung beabstandeten Dreipunktanschlußelemente 17 auf.

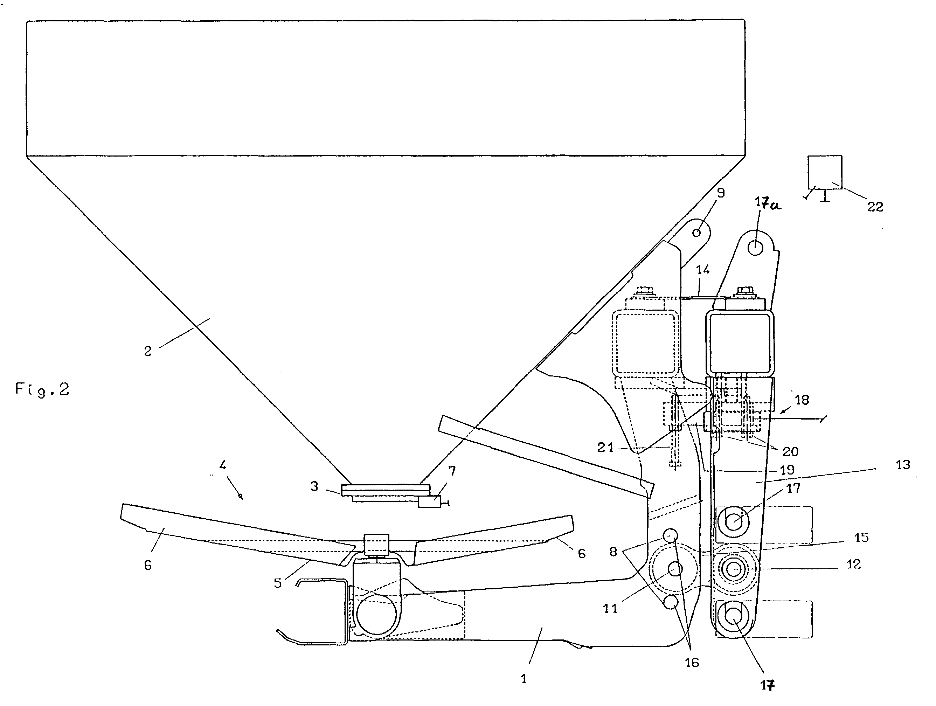

Wenn die Verteilmaschine mit der Wiegeeinrichtung 18 gemäß Fig.2 nachgerüstet wird, wird zwischen dem Vorsatzrahmen 13 und dem Rahmen 1 das Wiegezellenelement 19 angeordnet. Hierzu wird das Wiegezellenelement 19 mittels der beiden Befestigungsschrauben 20 an dem Vorsatzrahmen 13 befestigt. Gleichzeitig werden die Fixierungselemente 15 entfernt, so daß eine Relativbewegung zwischen Vorsatzrahmen 13 und Rahmen 1 zur Wiegung möglich ist. An dem dem Rahmen 1 zugewandten Ende des Wiegezellenelementes 19 ist die Justierschraube 21 angeordnet, um den Vorsatzrahmen 13 gegenüber dem Rahmen 1 der Verteilmaschine einjustieren zu können. Das Wiegezellenelement 19 ist mit einer elektronischen Regeleinrichtung 22 verbunden. Über diese Regeleinrichtung 22 wird das sich im Vorratsbehälter 2 befindliche Materialgewicht ermittelt, so daß sich hieraus unter Berücksichtigung des zurückgelegten Weges bzw. der Zeit und der Arbeitsbreite die ausgebrachte Materialmenge pro Flächeneinheit berechnen läßt. Falls diese berechnete und ermittelte Materialmenge vom Sollwert abweicht, wird das Einstellelement 7 der Dosiereinrichtung 3 von der Regeleinrichtung 22 angesteuert und die Ausbringmenge nachgeregelt.

## Patentansprüche

1. Landwirtschaftliche Verteilmaschine, insbesondere Düngerstreuer mit einem zumindest ein Dosierorgan (3) aufweisenden Vorratsbehälter (2) und einem Rahmen (1), der auf seiner Vorderseite Kupplungselemente (8, 9) zum Anbau an einen Dreipunktkraftheber eines Ackerschleppers aufweist, wobei vor dem Rahmen (1) ein ein Dreipunktkupplungselemente (17a, 17) aufweisender Vorsatzrahmen (13) im Bereich der Unterlenkeranschlußelemente (8) mittels zwei beabstandet zueinander angeordneter unterer Gelenkstreben (10) und im oberen Bereich mittels zweier beabstandet zueinander angeordneter, vorzugsweise als Blattfedern ausgebildeter Verbindungselemente (14) angeordnet ist, **dadurch gekennzeichnet, daß** wahlweise ein Wiegezellenelement (19) zwischen dem Rahmen (1) und dem Vorsatzrahmen (13) oder zwei den Vorsatzrahmen (13) gegenüber dem Rahmen (1) starr festsetzende Fixierungselemente (15) anordbar sind.

2. Verteilmaschine nach Anspruch 1, **dadurch gekennzeichnet, daß** das Wiegezellenelement (19) mit einer elektronischen Regeleinrichtung (22) verbunden ist.

3. Verteilmaschine nach Anspruch 1, **dadurch gekennzeichnet, daß** die Fixierungselemente (15) jeweils mittels zweier Bolzen (16) am Rahmen (1), vorzugsweise an den beiden übereinanderliegenden Unterlenkeranschlußpunkten (8) und am Vorsatzrahmen (13) an den Anlenkbolzen (12) der Gelenkstreben (10) befestigt sind.

## Claims

1. Agricultural distributor, more especially a fertiliser spreader, having a hopper (2), which includes at least one metering member (3), and a frame (1), which has, on its front side, coupling members (8, 9) for attachment to a three-point hydraulic lift of a tractor, an additional frame (13), which includes three-point coupling members (170, 17), being disposed in front of the frame (1) in the region of the lower guide rod connecting members (8) by means of two lower pivot struts (10), which are spaced apart from each other, and in the upper region by means of two connecting members (14), which are spaced apart from each other and are preferably in the form of leaf springs, **characterised in that** selectively a load cell (19) is disposable between the frame (1) and the additional frame (13), or two securing members (15), which rigidly secure the additional frame (13) relative to the frame (1), are disposable.

2. Distributor according to claim 1, **characterised in that** the load cell (19) is connected to an electronic control means (22).

3. Distributor according to claim 1, **characterised in that** the securing members (15) are each mounted by means of two pins (16) on the frame (1), preferably on the two lower guide rod connecting points (8), which are situated one above the other, and on the additional frame (13) at the pivot pins (12) of the pivot struts (10).

## Revendications

1. Epandeur agricole, notamment distributeur d'engrais, comprenant un réservoir (2) présentant au moins un organe doseur (3), et un cadre (1) qui, à sa face avant, présente des éléments de couplage (8, 9) pour le raccordement à un vérin à trois points d'un tracteur agricole, avec en amont du cadre (1) un cadre additionnel (12) présentant des éléments de couplage à trois points (17a, 17) et monté dans la zone des éléments de raccordement de bielle inférieure (8) à l'aide de deux entretoises articulées (10) disposées à distance l'une de l'autre, et dans la zone supérieure à l'aide de deux éléments d'assemblage (14), de préférence sous la forme de ressorts à lames disposés à distance l'un de l'autre,
**caractérisé en ce que**
l'on peut disposer soit un élément cellulaire de pesage (19) entre le cadre (1) et le cadre additionnel (13), soit deux éléments de fixation (15) fixant de manière rigide le cadre additionnel (13) par rapport au cadre (1).

2. Epandeur agricole selon la revendication 1,
**caractérisé en ce que**
l'élément cellulaire de pesage (19) est relié à un dispositif de régulation (22).

3. Epandeur agricole selon la revendication 1,
**caractérisé en ce que**
les éléments de fixation (15) sont respectivement fixés au cadre (1) à l'aide de deux boulons (16), de préférence aux deux points d'assemblage de bielle inférieure (8) superposés, et au cadre additionnel (13) aux boulons articulés (12) des entretoises articulées (10).
